# EUROPÄISCHE PATENTANMELDUNG

(11) **EP 1 845 307 A1**
(43) Veröffentlichungstag der Anmeldung: **17.10.2007**
(21) Anmeldenummer: 07104223.8
(22) Anmeldetag: 15.03.2007
(51) Int. Cl.: F23C 9/00, F23D 11/40, F23D 11/44, F23K 5/22, F23L 15/00

(54) **Öl-Vormischbrenner und Betriebsverfahren dafür**

(30) Priorität: 13.04.2006 DE 102006000174
(71) Anmelder: Honeywell Technologies Sarl, 1110 Morges (CH)
(72) Erfinder: Lüthi, Urs, 8303, Bassersdorf (CH)
(74) Vertreter: TBK-Patent

(57) **Zusammenfassung**

Verfahren zum Betrieb eines Öl-Vormischbrenners und Öl-Vormischbrenner, der ein Gemisch aus Öl, Abgas und Verbrennungsluft in einem Brennraum verbrennt. Die Verbrennungsluft wird zur Wärmeaufnahme durch eine mindestens abschnittsweise dem Brennraum ausgesetzte, von der Brennerflamme beabstandete Leiteinrichtung (6) von dem Brennraum (1) getrennt geführt und in einer Düse in der Leiteinrichtung beschleunigt. Dabei wird das Abgas aus dem Brennraum angesaugt und mit der Luft vermischt, und die durch Wärmeaufnahme erhitzte Verbrennungsluft und das Abgas werden danach mit dem Ö1 vermischt. Das Gemisch wird dem Brennraum zugeführt und dort verbrannt.

## Beschreibung

Die Erfindung bezieht sich auf einen Öl-Vormischbrenner und auf ein Verfahren zu dessen Betrieb.

Insbesondere bei Gasbrennern, die moduliert betrieben werden, d.h. der Leistungsbereich kann zwischen einem geringen Anteil der Maximalleistung und der Maximalleistung gesteuert werden, haben sich die sogenannten Vormisch- oder Premixbrenner durchgesetzt. Bei diesen Brennern wird der Brennstoff und die zu dessen Verbrennung erforderliche Verbrennungsluft von der Flamme örtlich getrennt vermischt und dann verbrannt. Dazu wird meist ein Flammhalter eingesetzt, der für das Brennstoff-Luftgemisch durchlässig ist und einen Innenraum umschließt, dem das Brennstoff-Luftgemisch zugeführt wird, das dann durch die Wand des Flammhalters hindurchtritt und auf der Außenseite des Flammhalters in einer Flamme verbrennt.

Mit dieser Technologie lassen sich kleine Flammen mit guten Abgaswerten, kleine Flammhalter und große Modulationsbereiche verwirklichen. Derartige Brenner werden als Gasbrenner bevorzugt in Kleinkesseln, Wandthermen oder anderen kleineren Heizvorrichtungen verwendet.

Der Erfindung liegt die Aufgabe zugrunde, ein Verfahren zum umweltfreundlichen Betrieb eines Öl-Vormischbrenners und einen umweltfreundlichen und haltbaren Öl-Vormischbrenner vorzuschlagen, der als modulierender Ölbrenner für Brennwertkessel auch für den Einsatz in kleinen Heizgeräten, insbesondere Kleinkesseln geeignet ist.

Diese Aufgabe wird mit einem Verfahren nach Anspruch 1 und mit einem Öl-Vormischbrenner nach Anspruch 11 gelöst.

In der Erfindung wird die Tatsache genutzt, dass heiße Luft Öl verdampft und somit ein Gasgemisch gebildet werden kann, das dann analog den Gas-Vormischbrennern durch den Flammhalter hindurchtritt und dann abbrennt. Durch die Zumischung von Abgas zur Verbrennungsluft wird zudem die Bildung von Stickoxiden (NOx) verringert bzw. vermieden. Ferner wird durch die Abgasbeimischung zur Luftvorwärmung auch das Anlaufverhalten insbesondere dahingehend verbessert, dass der Betriebspunkt schnell erreicht wird und der Brenner stabil arbeitet. Damit können Betriebszustände mit schlechtem Abgasverhalten weitgehend vermieden bzw. zur Bedeutungslosigkeit verkürzt werden.

Erfindungsgemäß wird ein Verfahren zum Betrieb eines Öl-Vormischbrenners vorgeschlagen, der ein Gemisch aus Öl, Abgas und Verbrennungsluft in einem Brennraum verbrennt, wobei die Verbrennungsluft zur Wärmeaufnahme durch eine mindestens abschnittsweise dem Brennraum ausgesetzte, von der Brennerflamme beabstandete Leiteinrichtung von dem Brennraum getrennt geführt wird. Die Verbrennungsluft wird in einer Düse in der Leiteinrichtung beschleunigt und das Abgas wird aus dem Brennraum angesaugt und mit der Luft vermischt. Die durch Wärmeaufnahme erhitzte Verbrennungsluft und das Abgas werden danach mit dem Öl vermischt, und das Gemisch wird dem Brennraum zugeführt.

Indem eine Berührung zwischen Flamme und Luftleiteinrichtung vermieden wird, ist die Haltbarkeit der Luftleiteinrichtung verbessert, während die Vorwärmleistung durch die Zumischung von Abgas angehoben wird, ohne dass eine Flammenberührung erforderlich ist.

Für die selbsttätige Ansaugung von Abgas in die Verbrennungsluft mit der richtigen Dosierung sorgt eine Düse, deren verengter Querschnitt mit höherer Geschwindigkeit und niedrigem statischen Druck ein Druckgefälle gegenüber der Brennkammer erzeugt, wodurch das Abgas angesaugt wird.

Vorzugsweise hat der Öl-Vormischbrenner einen in der Brennkammer angeordneten Flammhalter, an dessen äußerer Oberfläche das Gemisch aus Öl, Abgas und Verbrennungsluft verbrennt, das einem Innenraum des Flammhalters zugeführt wird.

In dem erfindungsgemäßen Verfahren können die erhitzte Verbrennungsluft und das Abgas über eine das Öl nebelförmig abgebende Öldüse geführt werden, so dass das Öl in dem Gasgemisch mindestens teilweise verdampft.

Ebenfalls vorzugsweise kann das Verfahren so geführt werden, dass die Temperatur des erhitzten Gasgemischs die Siedetemperatur des Öls übersteigt, so dass das zu verbrennende Gemisch als ein Gasgemisch vorliegt. Vorzugsweise beträgt die Temperatur der erhitzten Luft mindestens 250°C. In einer weiteren vorteilhaften Ausgestaltung liegt die Temperatur der erhitzten Luft in einem Bereich von 400°C ± 50°C. Durch die hohe Temperatur des Gemisches, das noch nicht brennend innerhalb des Flammhalters vorliegt, lässt sich erreichen, dass im Innenraum des Flammhalters eine sogenannte kalte Flamme brennt, die die Bildung von Ablagerungen beispielsweise aus Ölrückständen verhindert bzw. bestehende Ablagerungen auflösen kann.

In einer vorteilhaften Ausgestaltung der Erfindung wird die Verbrennungsluft in der Leiteinrichtung in Richtung in den in den Brennraum hinein geführt und nach Umlenkung im Gegenstrom in Richtung Brennraum heraus geführt, wobei der in den Brennraum gerichtete Luftstrom an einer dem Flammhalter abgewandten Seite der Leiteinrichtung geführt werden kann, während der aus dem Brennraum heraus gerichtete Luftstrom an einer dem Flammhalter zugewandten Seite der Leiteinrichtung geführt werden kann.

Weitere vorteilhafte Ausgestaltungen sind in den übrigen Unteransprüchen aufgezeigt.

Der erfindungsgemäß vorgeschlagene Öl-Vormischbrenner hat einen Brennraum zur Verbrennung eines Gemischs aus Öl und Verbrennungsluft, mindestens eine Öldüse zur Zufuhr des Öls und eine Luftleiteinrichtung zur Zufuhr der Verbrennungsluft zu der mindestens einen Öldüse, wobei die Luftleiteinrichtung mindestens abschnittsweise dem Brennraum ausgesetzt ist und die Verbrennungsluft durch den Brennraum leitet, um eine Wärmeübertragung von dem Brennraum auf die Verbrennungsluft zu ermöglichen. Die Position der Luftleiteinrichtung im Brennraum ist dabei so gewählt, dass die Leiteinrichtung die Brennerflamme nicht berührt und eine Düse enthält, die einen verengten Querschnitt zur Strömungsbeschleunigung hat, wobei der verengte Querschnitt mit dem Brennraum verbunden ist, um Abgas in die Luftleiteinrichtung anzusaugen.

In dem erfindungsgemäßen Brenner ist die Düse in der Luftleiteinrichtung im Bereich ihres verengten Querschnitts mit der Brennkammer verbunden. Dies kann durch ein oder mehrere radial oder axial in den Düsenquerschnitt eintauchende Rohre bewerkstelligt werden; es können aber auch Schlitze, Bohrungen oder dergleichen vorgesehen sein, die in der Nähe des verengten Querschnitts der Düse offen sind und mit der Brennkammer in Verbindung stehen.

Vorzugsweise ist eine Eintrittsöffnung für das Öl und die Verbrennungsluft mit dem Abgas in den Brennraum vorgesehen und ein Flammhalter ist in dem Brennraum angeordnet, wobei die Eintrittsöffnung in den Innenraum des Flammhalters mündet.

Vorzugsweise ist die Düse eine Venturidüse. Alternativ, wenn beispielsweise eine den Flammhalter umgebende Luftleiteinrichtung verwendet wird, kann die Düse auch durch entsprechende Verdickungen oder andere Formgebung gebildet sein, so dass ein den Flammhalter umgebender Düsenschlitz oder eine Lippendüse erhalten wird. Die Verbindung des verengten Querschnitts des Düsenschlitzes mit der Brennkammer kann dann vorzugsweise durch Öffnungen in der Düsenwandung erfolgen.

Vorzugsweise hat die Luftleiteinrichtung ein äußeres Wandbauteil, das einen in den Brennraum vorstehenden und von diesem mehrseitig umschlossenen Raum begrenzt, wobei in dem von dem äußeren Wandbauteil begrenzten Raum ein inneres Wandbauteil angebracht sein kann, das den Raum in mindestens zwei Luftkanalabschnitte unterteilt, die miteinander in Reihe verbunden sind und von der Verbrennungsluft in im wesentlichen entgegengesetzten Richtungen durchströmt sind.

In vorteilhaften Ausgestaltungen sind U-förmige Rohre verwendet, wobei die Schenkel des U das Zuführ- und Abführrohr bilden und die die Schenkel verbindende Basis ein Brennraum ist.

In einer vorteilhaften Ausgestaltung der Erfindung begrenzt das äußere Wandbauteil einen im wesentlichen ringförmigen Raum, der konzentrisch mit dem Flammhalter und/oder der Öldüse angeordnet ist und einen Abschnitt des Flammhalters umgibt. Dabei kann ein inneres Wandbauteil so angebracht sein, dass das innere Wandbauteil und das äußere Wandbauteil konzentrisch zueinander angeordnet sind und zwei konzentrische Luftkanalabschnitte bilden, wobei der radial äußere Luftkanalabschnitt den zufuhrseitigen Abschnitt der Luftleiteinrichtung bildet und der radial innere Luftkanalabschnitt den näher an dem Flammhalter angeordneten, ablaufseitigen Abschnitt der Luftleiteinrichtung mit dem Düsenschlitz bildet.

In einer alternaiven Ausgestaltung der Erfindung ist die Luftleiteinrichtung von einem brennraumseitig allseits geschlossenen säulenförmigen äußeren Wandbauteil gebildet, das in seinem inneren von dem inneren Wandbauteil in zwei im wesentlichen parallele Luftkanalabschnitte unterteilt ist, die am brennraumseitigen Stirnende miteinander verbunden sind. Vorzugsweise ist der zufuhrseitige Abschnitt der Luftleiteinrichtung von dem Flammhalter weiter entfernt ist als der ablaufseitige Abschnitt der Luftleiteinrichtung. In diesem ablaufseitigen Abschnitt der Luftleiteinrichtung ist die Düse vorzugsweise vorgesehen.

Ein guter Wärmeübergang auf die Verbrennungsluft kann erreicht werden, wenn die die Luftleiteinrichtung bildenden Wandbauteile aus Blech sind.

In einer möglichen Konstruktion hat der Brenner eine die Brennkammer einseitig begrenzende Sockelplatte an der die Luftleiteinrichtung, eine Düsenplatte und die Brennkammerwand angebracht sind, wobei in einem solchen Fall vorzugsweise das äußere Wandbauteil an der Sockelplatte befestigt ist und das innere Wandbauteil an der Düsenplatte befestigt und an dem äußeren Wandbauteil gehalten ist.

Die Erfindung wird nachfolgend anhand bevorzugter Ausführungsformen unter Bezugnahme auf die Zeichnung näher erläutert. Elemente mit gleicher oder ähnlicher Funktion sind mit gleichen Bezugszeichen versehen. Darin zeigt
Fig. 1 eine schematische Schnittansicht einer ersten Ausführungsform eines erfindungsgemäßen Öl-Vormischbrenners;
Fig. 2 eine schematische Schnittansicht einer zweiten Ausführungsform eines erfindungsgemäßen Öl-Vormischbrenners;
Fig. 3 eine dritte Ausführungsform eines erfindungsgemäßen Öl-Vormischbrenners in schematischer Schnittdarstellung; und
Fig. 4 eine vierte Ausführungsform eines erfindungsgemäßen Öl-Vormischbrenners in schematischer Schnittansicht.

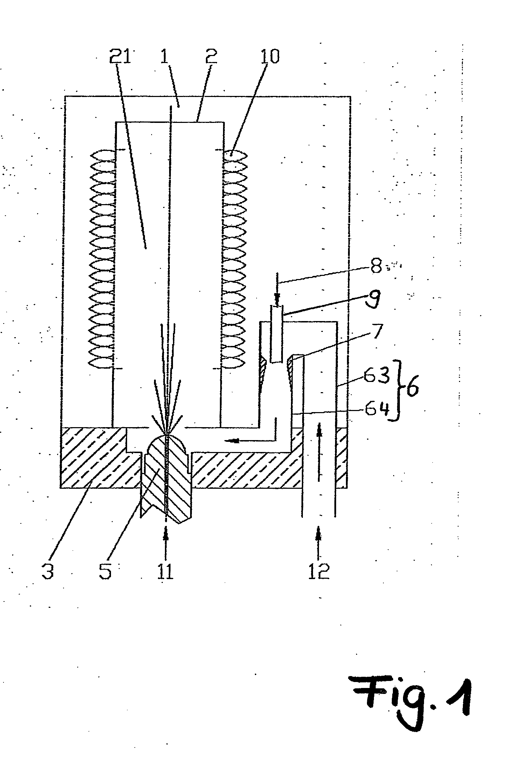

Das in Fig. 1 gezeigte erste Ausführungsbeispiel eines erfindungsgemäßen Öl-Vormischbrenners hat eine Brennkammer 1, die auf der einen Seite mittels einer Sockelplatte 3 verschlossen ist. Die Sockelplatte 3 ist von Öffnungen durchbrochen und trägt eine Öldüse 5, durch die Öl 11 zerstäubend eingespritzt werden kann. Des Weiteren ist auf der Sockelplatte 3 ein Flammhalter 2 aufgesetzt, der einen Innenraum oder Mischraum 21 umgibt. Der Flammhalter 2 hat Öffnungen, aus denen ein Gasgemisch aus dem Mischraum 21 Richtung auf den Brennraum 1 austreten kann. Im Brennraum ist das aus dem Mischraum austretende brennbare Gasgemisch entzündet und bildet einen Flammenkranz oder eine Brennerflamme 10, die am Flammhalter brennt. Das durch Abbrennen des Gasgemischs in der Brennerflamme 10 entstehende Abgas 8 wird, bis auf einen später zu erläuternden Anteil, durch eine nicht gezeigte Öffnung vom Brenner weggeführt und zu Heizzwecken etc. eingesetzt.

Auf der rechten Seite in Fig. 1 ist eine Luftleiteinrichtung 6 gezeigt, die in der dargestellten Form von einem U-förmigen Rohr gebildet ist, das einen Zuführschenkel 63 und einen Abführschenkel 64 hat, wobei die beiden Schenkel brennraumseitig an einer Basis miteinander verbunden sind. Für die Verbrennung des zuzuführenden Öls 11 erforderliche Luft wird durch die Leitung 12 zugeführt. Diese Luft passiert unter Wärmeaufnahme aus dem heißen Abgas zunächst das Zuführrohr 63 und gelangt dann in das Abführrohr 64, das mit einer Düse 7 versehen ist, die in Form einer Venturidüse gestaltet ist. Es ist anzumerken, dass die Darstellung der Düse 7 in Fig. 1 sowohl hinsichtlich ihrer Form als auch ihrer Lage in dem Abführrohr 64 lediglich schematisch ist. Der Düse 7 ist ein Rohr 9 zugeordnet, das die Basis des U-förmigen Luftleitrohrs 6 durchdringend angeordnet ist und in der Nähe des engsten Querschnitts der Düse 7 zentral in diese mündet. Durch die Zuführleitung 63 zugeführte Luft wird in der Düse 7 beschleunigt. Dabei fällt der statische Druck im verengten Querschnitt der Düse 7 und dieser verminderte Druck reicht aus, um einen gewünschten Abgasstrom 8 aus dem Brennraum 1 anzusaugen.

Das angesaugte Abgas reduziert die erreichten Temperaturen der Brennerflamme und damit die Bildung von Stickoxiden (NOx) und dient gleichzeitig der Verbesserung der Luftvorwärmung, indem ein Teil der Wärme, die das Abgas mitbringt, direkt in die Luft eingetragen wird, ohne dass die dem Brennraum zugewandte Wandung der Luftleiteinrichtung durch Wärmeübergänge und Wärmeleitvorgänge überwunden werden muss. Dieser unmittelbare Wärmeeintrag durch das Abgas bewirkt, dass der Brenner sehr schnell in einen stabilen Betriebszustand gelangt, weil beispielsweise das Öl sehr schnell und sicher verdampft wird, kaum Brennstoffkondensation an kalten Flächen stattfindet etc., so dass instabile Betriebszustände oder Zwischenzustände mit schlechtem Abgasverhalten sehr schnell durchlaufen werden bzw. nahezu entfallen.

Durch die Auslegung der Düsengeometrie und der Rohrgeometrie der Luftleiteinrichtung bzw. der Abgaszuführung kann ein gewünschter, sich automatisch einstellender Zusammenhang zwischen Luftströmung und aufgenommener Abgasmenge festgelegt werden. Mit anderen Worten, wenn mehr Luft durch die Luftleiteinrichtung strömt, steigt auch die Geschwindigkeit im verengten Düsenquerschnitt der Düse 7 und damit die durch das Rohr 9 aufgenommene Abgasmenge nach einem bestimmten Verhältnis. Dieses Verhältnis muss nicht konstant sein, trägt jedoch einer Veränderung der Luftmenge Rechnung.

Wie in Fig. 1 deutlich gezeigt ist, ist die Luftleiteinrichtung insgesamt von der Brennerflamme beabstandet angeordnet, damit diese nicht unmittelbar auf der Brennerflamme beaufschlagt wird. In dieser Auslegung ist die Haltbarkeit der Luftleiteinrichtung höher, weil die unmittelbare Flammenbeaufschlagung fehlt. Auf diese kann auch verzichtet werden, da die unmittelbare Zumischung von Abgas bereits einen sehr hohen Wärmeeintrag in die Luft ermöglicht, so dass der Wärmeübertragung von Abgas durch die Wand der Luftleiteinrichtung 6 eine geringere Bedeutung zukommt. Somit müssen die Wandtemperaturen der Luftleiteinrichtung nicht so hoch sein.

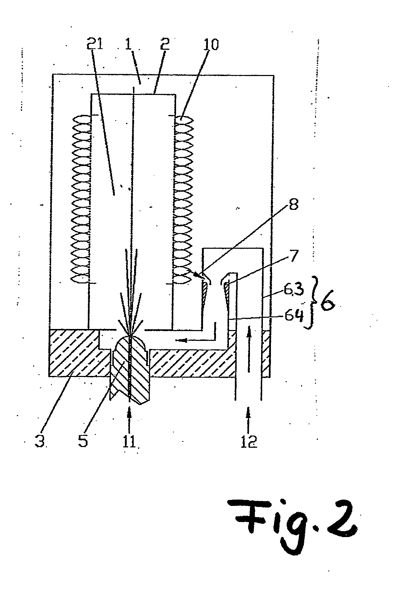

Fig. 2 zeigt ein zweites Ausführungsbeispiel eines erfindungsgemäßen Öl-Vormischbrenners ebenfalls in schematischer Darstellung. Das Ausführungsbeispiel gemäß Fig. 2 unterscheidet sich von der Fig. 1 im Wesentlichen durch die Form der Zuführung von Abgas zur Düse 7. In der Vorrichtung gemäß Fig. 2 ist im abführseitigen Strang 64 der Luftleiteinrichtung 6 ebenfalls eine Düse 7 eingebaut, der ein im Wesentlichen trichterförmiger Rohrabschnitt zugeordnet ist, so dass sich im Bereich des verengten Querschnitts der Düse 7 ein in Umfangsrichtung der Düse verlaufender Spalt ergibt. Dies bedeutet, dass sich im Unterschied zum Ausführungsbeispiel gemäß Fig. 1 in diesem Ausführungsbeispiel eine radiale Ansaugung von Abgas ergibt, so dass ein gedachter Strömungsquerschnitt in dieser Düse einen Luftkern mit einem Abgasmantel hat, während in Fig. 1 ein Abgaskern mit einem Luftmantel erhalten wird. In beiden Fällen wird bei den anschließenden Umlenkungen bis zum Eintritt des Luft/Abgasgemischs in den Mischraum 21 eine gute Vermischung von Luft und Abgas erreicht. Die weiteren Wirkungen des zweiten Ausführungsbeispiels entsprechen im Wesentlichen denen des ersten Ausführungsbeispiels.

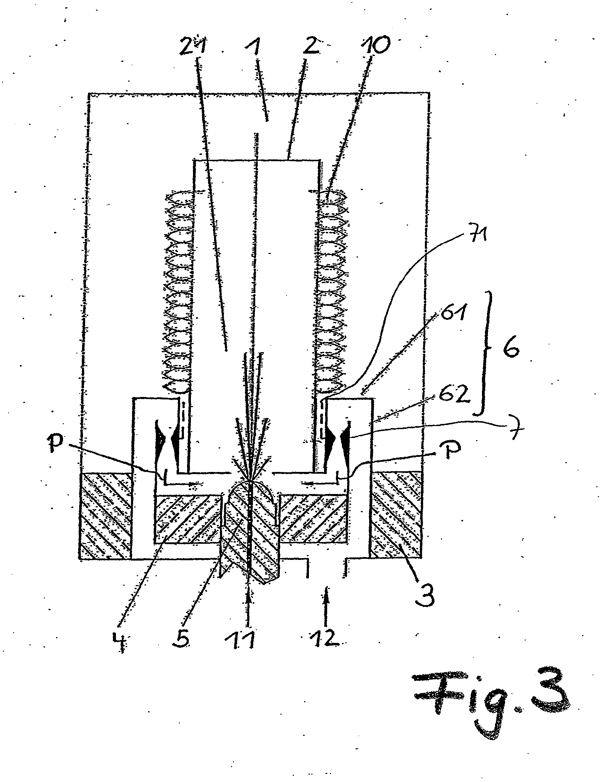

Fig. 3 zeigt eine schematische Schnittansicht einer dritten Ausführungsform eines erfindungsgemäßen Öl-Vormischbrenners. Der Brenner hat einen Brennraum 1, der an einer Seite (unten in Fig. 3) von einer Sockelplatte 3 begrenzt ist. Die Sockelplatte 3 trägt eine Luftleiteinrichtung 6, eine Düsenplatte 4 mit einer Öldüse 5 und einen Flammhalter 2, der in dem Brennraum 1 angeordnet ist. In den Mischraum 21 des Flammhalters 2 wird brennbares Gemisch zugeführt bzw. erzeugt, tritt dann durch die Wandung des Flammhalters 2 in den Brennraum 1 aus und verbrennt dort mit einer Flamme 10.

Die Luftleiteinrichtung 6 besteht aus zwei Wandbauteilen aus Blech, die als Außenblech 61 und als Innenblech 62 bezeichnet werden. Die Wandbauteile können jeweils aus mehreren Einzelteilen zusammengefügt sein; es ist aber auch möglich, diese Teile mit bekannten Mitteln der Blechverarbeitung als einstückiges Außenblech bzw. Innenblech zu fertigen.

Das Außenblech 61 bildet einen ringförmigen Hohlkörper, der konzentrisch zur Öldüse 5 angeordnet ist und von der Sockelplatte in den Brennraum 1 vorsteht. Innerhalb des Außenblechs 61 ist das ebenfalls konzentrisch zu der Öldüse 5 angeordnete Innenblech 62 angebracht, das den von dem Außenblech 61 begrenzten Ringraum in zwei Luftkanäle unterteilt, die am brennraumseitigen Ende des Ringraums miteinander verbunden sind. Im radial inneren Luftkanal ist eine Düse 7 ausgebildet, die im Bereich ihres verengten Querschnitts durch nicht gezeigte Öffnungen mit der Brennkammer 1 verbunden ist. Diese Verbindung ist mit 71 bezeichnet.

In dem so gebildeten ersten, radial äußeren Luftkanal strömt Verbrennungsluft 12 in Richtung auf das Brennrauminnere, die Luft wird dann am brennraumseitigen Ende des Ringraums in Gegenrichtung umgelenkt und unter Aufnahme von Abgas aus der Brennkammer 1 weiter zur Öldüse 5 geleitet. Wie Fig. 3 zu entnehmen ist, wird die zu der Öldüse 5 zuzuführende Luft in dem Ringraum von dem Brennraum 1 im Wesentlichen getrennt geführt. Die trennende Blechwand des Außenblechs 61 gestattet eine Übertragung von Wärme aus dem Brennraum 1 auf die gemäß Pfeilen P in der Luftleiteinrichtung 6 strömende Verbrennungsluft, die dadurch in gewünschter Weise erhitzt wird. Ein wesentlicher Anteil der Luftvorwärmung erfolgt jedoch durch die Aufnahme von Abgas.

Die erhitzte Verbrennungsluft mit dem Abgas passiert die Öldüse 5 und verdampft das von der Öldüse 5 nebelförmig abgegebene Öl 11 und vermischt sich damit. Die Temperatur der Luft ist vorzugsweise so gewählt, dass das Öl 11 vollständig verdampft und sich in der Verbrennungsluft vollständig löst. Damit liegt im Mischraum 21 des Flammhalters 2 ein brennbares Gasgemisch vor, das dann im Brennraum 1 auf der Außenseite des Flammhalters 2 abbrennt.

Das Innenblech 62 und das Außenblech 61 sind beispielsweise mittels nicht gezeigter Stege miteinander fest verbunden. Dadurch kann das Innenblech 62 die Düsenplatte 4, die auch die Öldüse 5 trägt halten. Bei dieser Anordnung ist die Düsenplatte 4 von der Verbrennungsluft umströmt, so dass sie nicht unmittelbar den Brennraumtemperaturen ausgesetzt ist, sondern von diesem gewissermaßen thermisch entkoppelt oder isoliert ist.

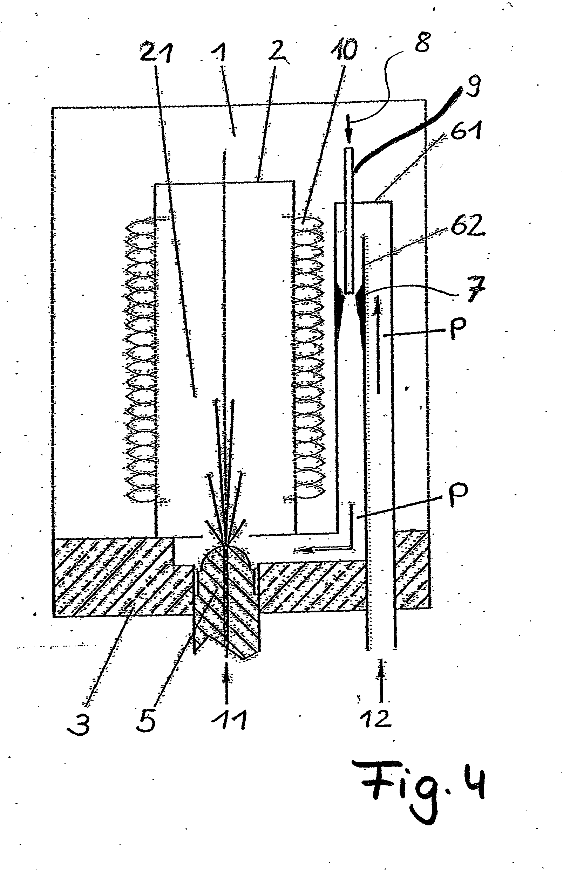

Fig. 4 zeigt ein weiteres Ausführungsbeispiel, das sich von den vorhergehenden Ausführungsbeispielen in der Form der Luftleiteinrichtung und der Ansaugung von Abgas unterscheidet.

In Fig. 4 ist auf der rechten Seite eine aus einem Außenblech 61 geformte säulenförmige Luftleiteinrichtung 6 gezeigt, die ausgehend von einer Sockelplatte 3 in das Innere des Brennraums 1 ragt. Der Querschnitt der Säule kann rund oder polygonal sein oder auch andere Formen haben; insbesondere halbrunde Formen. Der säulenförmige Innenraum der durch das Außenblech 61 begrenzt ist, ist durch ein Innenblech 62 in zwei miteinander verbundene Luftkanäle unterteilt. Die Luftkanäle sind im Bereich des brennraumseitigen Endes des säulenförmigen Innenraums miteinander verbunden, so dass im Innenraum die zunächst in Richtung des Brennrauminneren strömende Luft 12 am Stirnende der Säule umkehrt und dann in Richtung Sockelplatte 3 strömt. Die Luft wird dabei durch Wärmeübertragung aus dem Brennraum erhitzt. Zwischen Innenblech 62 und Außenblech 61 ist im in Fig. 4 linken Luftkanal eine Düse (Venturidüse) 7 angebracht und ein Rohr 9 durchdringt das Außenblech 61 und erstreckt sich in die Nähe des verengten Querschnitts der Düse 7. Die Durchdringung des Außenblechs ist abgedichtet, so dass das Rohr 9 die einzige Verbindung zum Innenraum der Luftleiteinrichtung darstellt. Durch den im verengten Düsenquerschnitt entstehenden geringeren statischen Druck wird Abgas 8 durch das Rohr 9 aus der Druckkammer 1 angesaugt und der Düsenströmung axial und zentral zugeführt und mit der Luft vermischt. Dieses Gasgemisch wird dann über die Öldüse 5 in den Flammhalter 2 zugeführt. Die dadurch erhaltenen Wirkungen sind gleich denen der vorhergehenden Ausführungsbeispiele, so dass hier darauf verwiesen wird.

Die einseitige Anordnung der Luftleiteinrichtung 6 in diesem Ausführungsbeispiel hat, wie im ersten und zweiten Ausführungsbeispiel, den Vorteil, dass auf der gegenüberliegenden Seite des Flammhalters 2 ausreichend Raum für die Anordnung weiterer Einrichtungen, wie Zündeinrichtung und/oder Flammüberwachung (nicht gezeigt) vorhanden ist.

In den vorliegenden Ausführungsbeispielen wurden Ausführungen beschrieben, die für die Luftleiteinrichtung 6 ein in etwa U-förmiges Rohr (Ausführungsbeispiele 1 und 2), eine konzentrisch um den Flammhalter 2 angeordnete Gestalt (drittes Ausführungsbeispiel) oder eine säulenförmige Gestalt (Ausführungsbeispiel 4) verwenden. Grundsätzlich ist es möglich, unter Beibehaltung der Lehre der unabhängigen Ansprüche die Gestalt der Luftleiteinrichtung der Brennraumform anzupassen. Dies kann insbesondere ein einfaches den Brennraum querendes Rohr sein, das dem Abgas ausgesetzt ist und in seinem Inneren die Düse 7 mit einer Ansaugöffnung für Abgas hat.

Ferner wurden stets Ausführungsbeispiele beschrieben, bei denen im abführenden Luftkanal der Luftleiteinrichtung 6 die Düse angeordnet ist. Die Düse kann auch im zuführenden Luftkanalabschnitt bzw. im Bereich der Wendestelle angeordnet sein.

## Patentansprüche

1. Verfahren zum Betrieb eines Öl-Vormischbrenners, der ein Gemisch aus Öl, Abgas und Verbrennungsluft in einem Brennraum (1) verbrennt, wobei
die Verbrennungsluft zur Wärmeaufnahme durch eine mindestens abschnittsweise dem Brennraum ausgesetzte, von der Brennerflamme beabstandete Leiteinrichtung (6) von dem Brennraum (1) getrennt geführt wird,
die Verbrennungsluft in einer Düse in der Leiteinrichtung beschleunigt wird und das Abgas aus dem Brennraum angesaugt und mit der Luft vermischt wird,
die durch Wärmeaufnahme erhitzte Verbrennungsluft und das Abgas danach mit dem Öl vermischt werden, und
das Gemisch dem Brennraum zugeführt wird.

2. Verfahren nach Anspruch 1, wobei der Öl-Vormischbrenner einen in dem Brennraum (1) angeordneten Flammhalter (2) hat, an dessen äußerer Oberfläche das Gemisch aus Öl, Abgas und Verbrennungsluft verbrennt, das einem Innenraum (21) des Flammhalters zugeführt wird.

3. Verfahren nach einem oder mehreren der Ansprüche 1 oder 2, **dadurch gekennzeichnet, dass** das erhitzte Gemisch aus Verbrennungsluft und Abgas über eine das Öl nebelförmig abgebende Öldüse (5) geführt wird und das Öl in der Verbrennungsluft mindestens teilweise verdampft.

4. Verfahren nach Anspruch 3, **dadurch gekennzeichnet, dass** die Temperatur der erhitzten Verbrennungsluft die Siedetemperatur des Öls übersteigt, so dass das zu verbrennende Gemisch als ein Gasgemisch vorliegt.

5. Verfahren nach einem oder mehreren der vorhergehenden Ansprüche, **dadurch gekennzeichnet, dass** die Temperatur der erhitzten Luft gleich oder höher als 250°C ist.

6. Verfahren nach Anspruch 5, **dadurch gekennzeichnet, dass** die Temperatur der erhitzten Luft in einem Bereich von 400°C ± 50°C liegt.

7. Verfahren nach einem oder mehreren der vorhergehenden Ansprüche, **dadurch gekennzeichnet, dass** die Verbrennungsluft in der Leiteinrichtung (6) in Richtung in den Brennraum (1) hinein geführt und nach Umlenkung im Gegenstrom in Richtung aus dem Brennraum (1) heraus geführt wird.

8. Verfahren nach Anspruch 7, **dadurch gekennzeichnet, dass** der in den Brennraum (1) gerichtete Luftstrom an einer dem Flammhalter (2) abgewandten Seite der Leiteinrichtung (6) geführt wird, während der aus dem Brennraum heraus gerichtete Luftstrom an einer dem Flammhalter (2) zugewandten Seite der Leiteinrichtung (6) geführt wird.

9. Verfahren nach Anspruch 8, **dadurch gekennzeichnet, dass** das Abgas von dem aus dem Brennraum (1) heraus gerichteten Luftstrom angesaugt wird.

10. Verfahren nach einem oder mehreren der vorhergehenden Ansprüche 1 bis 9, **dadurch gekennzeichnet, dass** die Luft im Bereich des Brennraums in der Leiteinrichtung säulenförmig geführt ist.

11. Öl-Vormischbrenner, mit:
einem Brennraum (1) zur Verbrennung eines Gemischs aus Öl, Abgas und Verbrennungsluft,
mindestens einer Öldüse (5) zur Zufuhr des Öls und
einer Luftleiteinrichtung (6) zur Zufuhr der Verbrennungsluft zu der mindestens einen Öldüse (5), wobei die Luftleiteinrichtung (6)
mindestens abschnittsweise dem Brennraum (1) ausgesetzt ist und die Verbrennungsluft durch den Brennraum leitet, um eine Wärmeübertragung von dem Brennraum auf die Verbrennungsluft zu ermöglichen,
um eine Position im Brennraum angeordnet ist, in der die Leiteinrichtung (6) die Brennerflamme nicht berührt; und
eine Düse (7) enthält, die einen verengten Querschnitt zur Strömungsbeschleunigung hat, wobei der verengte Querschnitt mit dem Brennraum verbunden ist, um Abgas in die Luftleiteinrichtung (6) anzusaugen.

12. Brenner nach Anspruch 11, **dadurch gekennzeichnet, dass** ein Flammhalter (2) in dem Brennraum angeordnet ist, in den die Luftleiteinrichtung (6) mündet.

13. Brenner nach Anspruch 11 oder 12, **dadurch gekennzeichnet, dass** die Luftleiteinrichtung (6) ein äußeres Wandbauteil (61) hat, das einen in den Brennraum (1) vorstehenden und von dem äußeren Wandbauteil mehrseitig umschlossenen Raum begrenzt.

14. Brenner nach Anspruch 13, **dadurch gekennzeichnet, dass** in dem von dem äußeren Wandbauteil (61) begrenzten Raum ein inneres Wandbauteil (62) angebracht ist, das den Raum in mindestens zwei Luftkanalabschnitte unterteilt, die miteinander in Reihe verbunden sind und von der Verbrennungsluft in im Wesentlichen entgegengesetzten Richtungen durchströmt sind, wobei die Düse (7) in einem der Luftkanäle vorgesehen ist.

15. Brenner nach Anspruch 13 oder 14, **dadurch**
**gekennzeichnet, dass**
das äußere Wandbauteil (61) einen im wesentlichen ringförmigen Raum begrenzt, der konzentrisch mit dem Flammhalter (2) und/oder der Öldüse (5) angeordnet ist und einen Abschnitt des Flammhalters (2) umgibt, und
das innere Wandbauteil (62) und das äußere Wandbauteil (61) konzentrisch zueinander angeordnet sind, und zwei konzentrische Luftkanalabschnitte bilden, wobei der radial äußere Luftkanalabschnitt den zufuhrseitigen Abschnitt der Luftleiteinrichtung (6) bildet und der radial innere Luftkanalabschnitt den näher an dem Flammhalter (2) angeordneten, ablaufseitigen Abschnitt der Luftleiteinrichtung (6) bildet.

16. Brenner nach Anspruch 14, **dadurch gekennzeichnet, dass** die Luftleiteinrichtung (6) von einem brennraumseitig allseits geschlossenen säulenförmigen äußeren Wandbauteil (61) gebildet ist, das in seinem inneren von einem inneren Wandbauteil (62) in zwei im Wesentlichen parallele Luftkanalabschnitte unterteilt ist, die am brennraumseitigen Stirnende miteinander verbunden sind.

17. Brenner nach Anspruch 16, **dadurch gekennzeichnet, dass** der zufuhrseitige Abschnitt der Luftleiteinrichtung (6) von dem Flammhalter (2) weiter entfernt ist als der ablaufseitige Abschnitt der Luftleiteinrichtung (6).

18. Brenner nach Anspruch 13, **dadurch gekennzeichnet, dass** die Luftleiteinrichtung (6) ein dem Brennraum ausgesetztes Rohr umfasst, in dem die Verbrennungsluft bei Durchströmen aufgewärmt wird.

19. Brenner nach Anspruch 18, **dadurch gekennzeichnet, dass** das Rohr U-förmig verläuft, wobei die beiden Schenkel (63, 64) des U-förmigen Rohrs parallele, in entgegengesetzten Richtungen durchströmte Luftkanalabschnitte bilden, von denen einer die Düse (7) enthält.

20. Brenner nach einem oder mehreren der vorhergehenden Ansprüche 11 bis 19, **dadurch gekennzeichnet, dass** mindestens ein die Wand der Luftleiteinrichtung (6) durchdringendes Rohr (9) vorgesehen ist, das axial und zentral in den verengten Querschnitt der Düse (7) mündet.

21. Brenner nach einem oder mehreren der vorhergehenden Ansprüche 11 bis 19, **dadurch gekennzeichnet, dass** im Bereich des verengten Querschnitts der Düse (7) mindestens ein in Umfangsrichtung der Düse verlaufender Spalt vorgesehen ist, der mit dem Brennraum (1) verbunden ist.

22. Brenner nach einem oder mehreren der vorhergehenden Ansprüche 11 bis 19, **dadurch gekennzeichnet, dass** im Bereich des verengten Querschnitts der Düse (7), mindestens eine Öffnung ausgebildet ist, die mit dem Brennraum (1) in Fluidverbindung (71) steht.

23. Brenner nach einem oder mehreren der vorhergehenden Ansprüche 11 bis 22, **dadurch gekennzeichnet, dass** die Düse (7) in dem flammenhalterseitigen Luftkanalabschnitt der Luftleiteinrichtung (6) vorgesehen ist.

## Geänderte Patentansprüche

### Geänderte Patentansprüche gemäss Regel 86(2) EPÜ.

**1.** Öl-Vormischbrenner, mit:
einem Brennraum (1) zur Verbrennung eines Gemischs aus Öl, Abgas und Verbrennungsluft,
mindestens einer Öldüse (5) zur Zufuhr des Öls und
einer Luftleiteinrichtung (6) zur Zufuhr der Verbrennungsluft zu der mindestens einen Öldüse (5), wobei die Luftleiteinrichtung (6)
mindestens abschnittsweise dem Brennraum (1) ausgesetzt ist und die Verbrennungsluft durch den Brennraum leitet, um eine Wärmeübertragung von dem Brennraum auf die Verbrennungsluft zu ermöglichen,
um eine Position im Brennraum angeordnet ist, in der die Leiteinrichtung (6) die Brennerflamme nicht berührt; und
eine Düse (7) enthält, die einen verengten Querschnitt zur Strömungsbeschleunigung hat, wobei der verengte Querschnitt mit dem Brennraum verbunden ist, um Abgas in die Luftleiteinrichtung (6) anzusaugen.

**2.** Brenner nach Anspruch 1, **dadurch gekennzeichnet, dass** ein Flammhalter (2) in dem Brennraum angeordnet ist, in den die Luftleiteinrichtung (6) mündet.

**3.** Brenner nach Anspruch 1 oder 2, **dadurch gekennzeichnet, dass** die Luftleiteinrichtung (6) ein äußeres Wandbauteil (61) hat, das einen in den Brennraum
(1) vorstehenden und von dem äußeren Wandbauteil mehrseitig umschlossenen Raum begrenzt.

**4.** Brenner nach Anspruch 3, **dadurch gekennzeichnet, dass** in dem von dem äußeren Wandbauteil (61) begrenzten Raum ein inneres Wandbauteil (62) angebracht ist, das den Raum in mindestens zwei Luftkanalabschnitte unterteilt, die miteinander in Reihe verbunden sind und von der Verbrennungsluft in im Wesentlichen entgegengesetzten Richtungen durchströmt sind, wobei die Düse (7) in einem der Luftkanäle vorgesehen ist.

**5.** Brenner nach Anspruch 3 oder 5, **dadurch gekennzeichnet, dass**
das äußere Wandbauteil (61) einen im Wesentlichen ringförmigen Raum begrenzt, der konzentrisch mit dem Flammhalter (2) und/oder der Öldüse (5) angeordnet ist und einen Abschnitt des Flammhalters (2) umgibt, und
das innere Wandbauteil (62) und das äußere Wandbauteil (61) konzentrisch zueinander angeordnet sind, und zwei konzentrische Luftkanalabschnitte bilden, wobei der radial äußere Luftkanalabschnitt den zufuhrseitigen Abschnitt der Luftleiteinrichtung (6) bildet und der radial innere Luftkanalabschnitt den näher an dem Flammhalter (2) angeordneten, ablaufseitigen Abschnitt der Luftleiteinrichtung (6) bildet.

**6.** Brenner nach Anspruch 4, **dadurch gekennzeichnet, dass** die Luftleiteinrichtung (6) von einem brennraumseitigen allseits geschlossenen säulenförmigen äußeren Wandbauteil (61) gebildet ist, das in seinem Inneren von einem inneren Wandbauteil (62) in zwei im Wesentlichen parallele Luftkanalabschnitte unterteilt ist, die am brennraumseitigen Stirnende miteinander verbunden sind.

**7.** Brenner nach Anspruch 6, **dadurch gekennzeichnet, dass** der zufuhrseitige Abschnitt der Luftleiteinrichtung (6) von dem Flammhalter (2) weiter entfernt ist als der ablaufseitige Abschnitt der Luftleiteinrichtung (6).

**8.** Brenner nach Anspruch 3, **dadurch gekennzeichnet, dass** die Luftleiteinrichtung (6) ein dem Brennraum ausgesetztes Rohr umfasst, in dem die Verbrennungsluft bei Durchströmen aufgewärmt wird.

**9.** Brenner nach Anspruch 8, **dadurch gekennzeichnet, dass** das Rohr U-förmig verläuft, wobei die beiden Schenkel (63, 64) des U-förmigen Rohrs parallele, in entgegengesetzten Richtungen durchströmte Luftkanalabschnitte bilden, von denen einer die Düse (7) enthält.

**10.** Brenner nach einem oder mehreren der vorhergehenden Ansprüchen 1 bis 9, **dadurch gekennzeichnet, dass** mindestens ein die Wand der Luftleiteinrichtung (6) durchdringendes Rohr (9) vorgesehen ist, das axial und zentral in den verengten Querschnitt der Düse (7) mündet.

**11.** Brenner nach einem oder mehreren der vorhergehenden Ansprüche 1 bis 9, **dadurch gekennzeichnet, dass** im Bereich des verengten Querschnitts der Düse (7) mindestens ein in Umfangsrichtung der Düse verlaufender Spalt vorgesehen ist, der mit dem Brennraum (1) verbunden ist.

**12.** Brenner nach einem oder mehreren der vorhergehenden Ansprüche 1 bis 9, **dadurch gekennzeichnet, dass** im Bereich des verengten Querschnitts der Düse (7) mindestens eine Öffnung ausgebildet ist, die mit dem Brennraum (1) in Fluidverbindung (71) steht.

**13.** Brenner nach einem oder mehreren der vorhergehenden Ansprüche 1 bis 12, **dadurch gekennzeichnet, dass** die Düse (7) in dem flammenhalterseitigen Luftkanalabschnitt der Luftleiteinrichtung (6) vorgesehen ist.
